**Europäisches Patentamt**

**European Patent Office**

**Office européen des brevets**

(11) Veröffentlichungsnummer: **0 211 105**
**B1**

(12) **EUROPÄISCHE PATENTSCHRIFT**

(45) Veröffentlichungstag der Patentschrift:
**12.10.88**

(21) Anmeldenummer: **85116353.5**

(22) Anmeldetag: **20.12.85**

(51) Int. Cl.⁴: **F 16 D 3/80**

(54) **Wellenkupplung.**

(30) Priorität: **03.06.85 DE 3527990**

(43) Veröffentlichungstag der Anmeldung:
**25.02.87 Patentblatt 87/9**

(45) Bekanntmachung des Hinweises auf die Patenterteilung:
**12.10.88 Patentblatt 88/41**

(84) Benannte Vertragsstaaten:
**DE FR GB IT**

(56) Entgegenhaltungen:
**FR-A-1 192 727**
**FR-A-2 256 348**
**FR-A-2 268 186**
**FR-A-2 297 355**
**GB-A-841 797**
**GB-A-2 055 447**
**GB-A-2 073 370**
**US-A-2 158 847**

(73) Patentinhaber: **Firma Carl Freudenberg, Höhnerweg
4, D-6940 Weinheim/Bergstrasse (DE)**

(72) Erfinder: **Eckel, Hans Gerd, Dr., Im Hefen 1a,
D-6945 Hirschberg (DE)**
Erfinder: **Jörg, Benno, Am Drachenstein 27, D-6940
Weinheim (DE)**

(74) Vertreter: **Weissenfeld- Richters, Helga, Dr.,
Höhnerweg 2, D-6940 Weinheim/Bergstrasse (DE)**

## Beschreibung

Die Erfindung betrifft eine elastische Wellenkupplung nach dem Oberbegriff von Anspruch 1.

Eine solche Wellenkupplung ist aus der FR-PS-2 268 186 bekannt. Der Federkörper dient dabei nicht nur zur Übertragung der Drehbewegung, sondern zusätzlich zur Abdichtung des Ringraumes, in dem eine Flüssigkeit eingeschlossen ist. Er muß folglich eine Doppelfunktion erfüllen, was insbesondere bei der Übertragung hoher Wellendrehzahlen äußerst problematisch ist.

Die bestehenden Schwierigkeiten resultieren vor allem aus den sich bei der Einwirkung von Kräften in dem Federkörper ergebenden Verformungen, beispielsweise bei der Einwirkung von Fliehkräften. Diese können bei hohen Wellendrehzahlen erheblich werden und zu einem völlig veränderten Federverhalten führen. Die Verwendung von Wellenkupplungen nach der FR-PS-2 268 186 in Fällen, in denen mit einer hohen Wellendrehzahl gerechnet werden muß, ist daher äußerst problematisch.

Der Erfindung liegt die Aufgabe zugrunde, eine elastische Wellenkupplung der eingangs genannten Art derart weiter zu entwickeln, daß fliehkraftbedingte Deformierungen des Federkörpers nicht mehr auftreten können.

Diese Aufgabe wird erfindungsgemäß mit den kennzeichnenden Merkmalen von Anspruch 1 gelöst. Auf vorteilhafte Ausgestaltung nehmen die Unteransprüche Bezug.

Die erfindungsgemäße Wellenkupplung ist somit dadurch gekennzeichnet, daß der Federkörper innerhalb des nach außen unnachgiebig begrenzten Ringraumes angeordnet ist, und daß die verbleibenden Freiräume mit einer Flüssigkeit ausgefüllt sind, welche im wesentlichen die selbe Dichte aufweist wie der Federkörper. Die Flüssigkeit besteht ebenso wie der Federkörper aus einer Materie, die gut verformbar, jedoch nicht komprimierbar ist. Sie ist in dem Freiraum zwischen dem Federkörper und den unnachgiebigen Flanschen angeordnet, woraus eine ausgezeichnete Abstützung des Federkörpers im Hinblick auf die Vermeidung fliehkraftbedingter Gestaltveränderungen resultiert. Der Federkörper kann dadurch ausschließlich im Hinblick auf die speziellen Erfordernisse der Übertragung von Drehbewegungen in seiner Gestalt optimiert werden, wobei die Beibehaltung dieser Gestalt bis zum Erreichen höchster Wellendrehzahlen gewährleistet ist. Wellenschwingungen lassen sich wesentlich besser isolieren als bisher für möglich gehalten, hinsichtlich der Auswahl der für die Herstellung des Federkörpers verwendeten Werkstoffe ergibt sich eine wesentliche Vereinfachung.

Am einfachsten lassen sich die zur Verformung des Federkörpers führenden Kräfte durch die Verwendung einer Flüssigkeit kompensieren, die dieselbe Dichte hat wie der Federkörper. Entsprechende Flüssigkeiten sind bekannt und umfassen solche wie Wasser, Silikonöl und Glykol. Ein Auffüllen des vorhandenen Freiraumes der sich drehenden Wellenkupplung bis zur radial inneren Begrenzungsfläche des Federkörpers führt in diesem Falle zu vollem Erfolg.

In Fällen, in denen der Federkörper eine etwas größere Dichte aufweist als die Flüssigkeit, läßt sich ein entsprechendes Ergebnis erzielen durch eine entsprechend vergrößerte Überflutung der radialen Innenfläche des Federkörpers bei sich drehender Wellenkupplung. Die Höhe der im Einzelfalle erforderlichen Überflutung läßt sich im Versuch exakt ermitteln oder auch errechnen. Ein besonderer Aufwand ist hinsichtlich der diesbezüglichen Feinarbeit jedoch in den meisten Fällen entbehrlich und zumindest teilweise durch Erfahrungswissen ersetzbar.

Der die Flüssigkeit enthaltende Freiraum ist in radialer Richtung nach außen und in axialer Richtung beiderseits flüssigkeitsundurchlässig begrenzt. Er bedarf durch die ringförmige Verteilung des enthaltenen Flüssigkeitsvolumens bei sich drehender Welle auch in dem radial innenliegenden Bereich an sich keiner sekundären Abdichtung, wenn sichergestellt ist, daß das betriebsnotwendige Flüssigkeitsvolumen bei Wellenstillstand nicht entweichen kann. Die Verwendung einer Dichtung zwischen den beiden Flanschen in dem genannten Bereich ist ebenfalls möglich und empfiehlt sich insbesondere dann, wenn die Einhaltung der vorgenannten Bedingung nicht möglich oder zu befürchten ist, daß sich während des normalen Betriebes der Wellenkupplung Fremdstoffe in den Freiraum einlagern. Insbesondere die Verwendung von Bewegungsdichtungen hat sich ausgezeichnet bewährt. Ihre Anbringung in anderen Zonen der Wellenkupplung ist ebenfalls möglich, erfordert jedoch eine spezielle Berücksichtigung des sich fliehkraftbedingt ergebenden Druckaufbaues in dem Freiraum. Eine Zuordnung zum Innendurchmesser der Wellenkupplung wird daher bevorzugt.

Die spezielle Zuordnung des Federkörpers zu den beiden Flanschen kann bekannten Vorbildern folgen. Die in Anspruch 2 angesprochene Ausgestaltung ermöglicht die Übertragung hoher Drehmomente bei geringem Durchmesser, die in Anspruch 3 angesprochene Ausführung vereint in sich eine besonders weiche Federcharakteristik mit einer geringen axialen Baulänge. Jede der beiden grundsätzlichen Ausführungsmöglichkeiten hat somit spezielle Einzelvorteile. Diese können bedarfsweise zusammengefaßt werden durch eine Parallel- oder eine Hintereinanderschaltung von mehreren einzelnen Federelementen. Der wesentliche Inhalt der vorliegenden Erfindung wird dadurch nicht berührt.

In Fällen, in denen beiderseits des Federelementes Flüssigkeit enthaltende Freiräume vorhanden sind, hat es sich als vorteilhaft bewährt, die einzelnen Freiräume durch Kanäle zu verbinden. Diese sollen im Bereich des Außenumfanges des Federelementes und/oder der Flansche vorgesehen sein, um zu erreichen, daß die sich bei drehender Welle ergebende Druckverteilung in den Freiräumen identisch ist. Auch eine einseitige Erwärmung der vorgeschlagenen Wellenkupplung kann so nicht zu einer nachteiligen Veränderung des Betriebsverhaltens führen. Die Ausgestaltungsform hat insbesondere Bedeutung für Ausführungen, bei denen der Federkörper zwischen einander radial umschließenden Halteflächen der Flansche festgelegt ist.

Der Federkörper kann aus einer Vielzahl von Einzelelementen bestehen, die gleichmäßig auf den Umfang der Wellenkupplung verteilt sind. Im Hinblick auf die Vermeidung von Unwuchten bei hohen Wellendrehzahlen hat es sich jedoch als vorteilhafter bewährt, wenn der Federkörper rotationssymmetrisch ausgebildet und der Rotationsachse koaxial zugeordnet ist. Hinsichtlich der Herstellung und Montage ergibt sich bei einer solchen Ausführung eine starke Vereinfachung.

Der Gegenstand der vorliegenden Erfindung wird nachfolgend anhand der in der Anlage beigefügten Zeichnung weiter erläutert.

Es zeigen:

Figur 1 eine Wellenkupplung, bei der ein dreigeteilter Federkörper an einen axialen Abstand aufweisenden Halteflächen der beiden Flansche festgelegt sind.

Figur 2 eine Ausführung, bei der ein Federkörper einander radial umschließende Halteflächen der beiden Flansche verbindet.

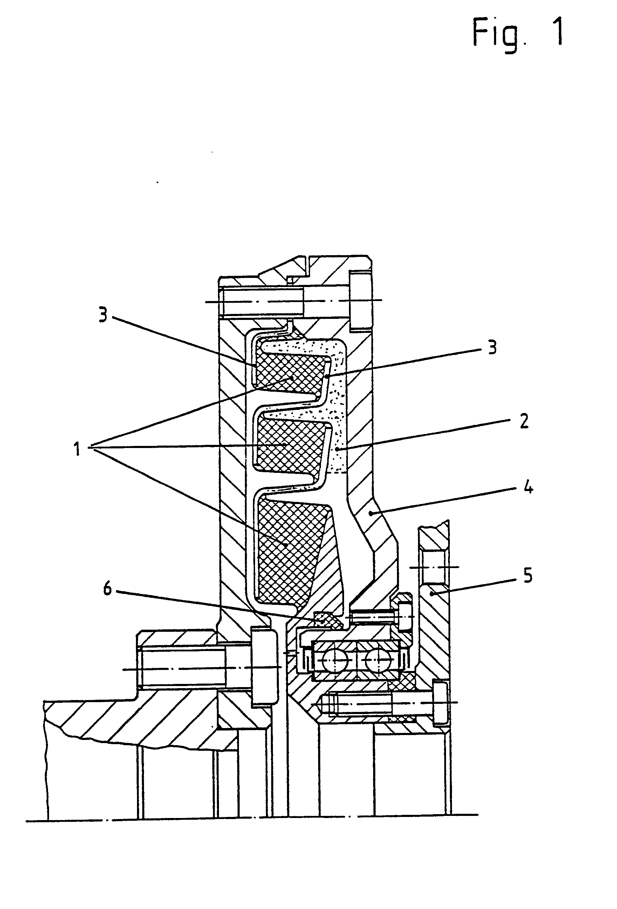

Die in Figur 1 gezeigte Wellenkupplung umfaßt die beiden Flansche 4, 5 die jeweils an einem der einander gegenüberliegenden und zu verbindenden Wellenenden festgelegt sind. Die beiden Flansche sind durch eine Kugellagerung relativ zueinander verdrehbar aufeinander abgestützt und umschließen gemeinsam einen die Rotationsachse kreisringförmig umschließenden Hohlraum 2 von im wesentlichen rechteckigem Profil.

Beide Flansche 4, 5 sind mit in den Hohlraum radial eingreifenden Hilfsflanschen versehen, die einen axialen Abstand haben und der Festlegung des Federkörpers 1 dienen. Dieser ist bei dem gezeigten Ausführungsbeispiel dreigeteilt und umfaßt drei einander koaxial umschließende einzelne Federkörper. Sie wirken in einer Reihenschaltung zusammen und sind hinsichtlich Ihres Querschnittes und Ihrer Härte so aufeinander abgestimmt, daß sich im Bezug auf das Spektrum eingeleiteter Schwingungen eine optimale Isolierung ergibt.

Der von dem Federkörper 1 und dem Flansch 4 umschlossene Ringraum ist teilweise mit einem Gemisch aus Glykol und Wasser gefüllt. Die Menge des Gemisches ist so bemessen, daß der äußere Teil des angesprochenen Ringraumes bei sich drehender Welle bis zur radial innenliegenden Begrenzungskante des mittleren Federelementes aufgefüllt ist. Bei einem Außendurchmesser der Wellenkupplung von 350 mm ergibt sich hierdurch ein gutes Betriebsverhalten bis zu einer Wellendrehzahl von 5000/min. Bis zum Erreichen der genannten Drehzahl werden störende Deformierungen der äußeren Federkörper vermieden, was auf deren Abstützung durch die Flüssigkeit beruht. Der innere Federkörper ist durch Fliehkräfte vergleichsweise geringer belastet und kompakter ausgeführt. Er bedarf daher nicht der zusätzlichen Abstützung.

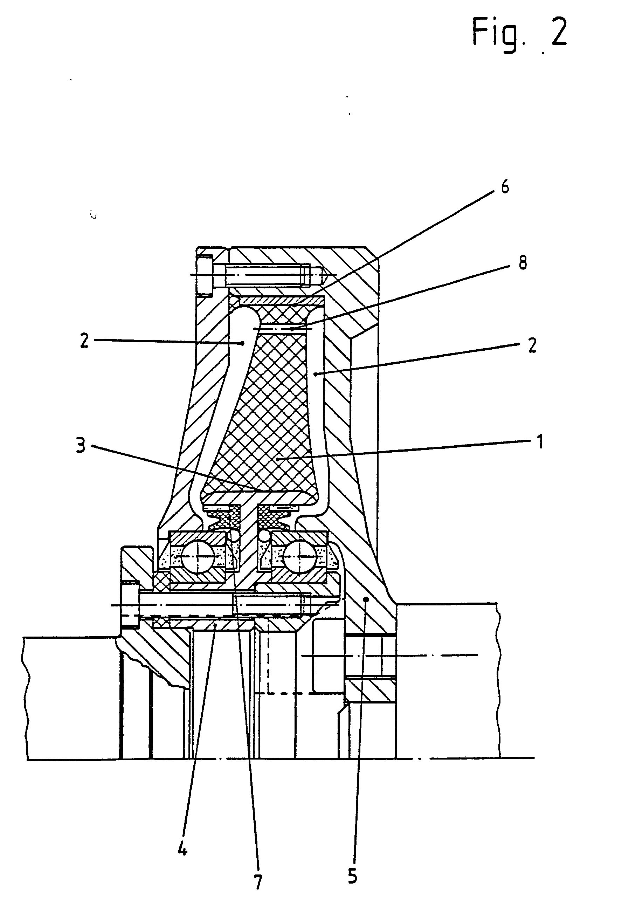

Bei der Ausführung nach Figur 2 gelangt ebenso wie bei dem vorstehend beschriebenen Beispiel ein die Rotationsachse koaxial umgebender, kreisringförmig in sich geschlossener Federkörper 1 zur Anwendung. Dieser verbindet im Gegensatz zum vorstehend beschriebenen Ausführungsbeispiel jedoch nicht axial einander gegenüberliegende Halteflächen der beiden Flansche 4, 5, sondern einander radial umschließende Halteflächen.

Die beiden Flansche sind ebenso wie diejenigen nach Figur 1 an den beiden zu verbindenden Wellenenden festgelegt und durch eine Kugellagerung verdrehbar aufeinander abgestützt. Sie umschließen gemeinsam den durch Bewegungsdichtungen 7 nach außen abgeschlossenen Ringraum 2. In diesem ist der aus gummielastischem Werkstoff bestehende Federkörper 1 angeordnet, die übrigen Freiräume sind vollständig mit einem Gemisch Glykol und Wasser gefüllt. Sie stehen durch den im Bereich des Außenumfanges des Federkörpers 1 angeordneten Kanal 8 in einer hydraulischen Verbindung. Die Druckverteilung in den beiden Freiräumen ist daher unabhängig von der Drehzahl stets absolut identisch.

Zur Funktion ist auszuführen, daß sich in dem Federkörper der erfindungsgemäßen Wellenkupplung mit zunehmender Drehzahl Fliehkräfte aufbauen, die durch die sich in gleicher Größe in der Flüssigkeit aufbauenden Fliehkräfte kompensiert werden und folglich nicht mehr zu einer das Betriebsverhalten störenden Deformierung des Federkörpers führen können. Die tatsächliche Belastung des Federkörpers ist hierdurch, insbesondere bei hohen Wellendrehzahlen, verglichen mit herkömmlichen Ausführungen, stark vermindert, die Erzielung einer optimalen Auslegung in Bezug auf die Isolierung von Schwingungen stark vereinfacht.

**Patentansprüche**

1. Elastische Wellenkupplung, umfassend zwei an den Wellenenden festgelegte, unnachgiebige Flansche (4, 5), die gemeinsam einen die Rotationsachse koaxial umschließenden Ringraum (2) begrenzen, eine in dem Ringraum enthaltene Flüssigkeit sowie wenigstens einen Federkörper (1) aus gummielastischem Werkstoff, der die Flansche verbindet, dadurch gekennzeichnet, daß der Federkörper (1) in dem Ringraum (2) angeordnet ist und daß die Flüssigkeit im wesentlichen dieselbe Dichte aufweist wie der Federkörper.

2. Wellenkupplung nach Anspruch 1, dadurch gekennzeichnet, daß der Federkörper (1) einander axial gegenüberliegende Halteflächen (3) der beiden Flansche (4, 5) verbindet.

3. Wellenkupplung nach Anspruch 1, dadurch gekennzeichnet, daß der Federkörper (1) einander radial umschließende Halteflächen (3) der beiden Flansche (4, 5) verbindet.

4. Wellenkupplung nach Anspruch 1 bis 3, dadurch gekennzeichnet, daß die beiden Flansche (4, 5) in Umfangsrichtung beweglich gegeneinander abgedichtet sind.

5. Wellenkupplung nach Anspruch 4, dadurch gekennzeichnet, daß die Abdichtung (6, 7) als Bewegungsabdichtung ausgeführt ist.

6. Wellenkupplung nach Anspruch 4, dadurch gekennzeichnet, daß die Abdichtung durch eine elastische Membran gebildet wird.

7. Wellenkupplung nach Anspruch 4 bis 6, dadurch gekennzeichnet, daß die Abschichtung radial innerhalb des Federkörpers (1) angeordnet ist.

8. Wellenkupplung nach Anspruch 1 bis 7, dadurch gekennzeichnet, daß der Federkörper (1) die Rotationsachse der Wellen ringförmig umschließt.

## Claims

1. A flexible shaft coupling, comprising two inflexible flanges (4, 5) fixed on the shaft ends, which flanges together bound an annular space (2) coaxially enclosing the axis of rotation, a fluid contained in the annular space and at least one spring body (1) of elastomeric material, which connects the flanges, characterized in that the spring body (1) is arranged in the annular space (2) and that the fluid has essentially the same density as the spring body.

2. A shaft coupling according to claim 1, characterized in that the spring body (1) connects retaining surfaces (3), axially opposite each other, of the two flanges (4, 5).

3. A shaft coupling according to claim 1, characterized in that the spring body (1) connects retaining surfaces (3), radially enclosing each other, of the two flanges (4, 5).

4. A shaft coupling according to any of claims 1 to 3, characterized in that the two flanges (4, 5) are sealed off from each other movably in circumferential direction.

5. A shaft coupling according to claim 4, characterized in that the seal (6, 7) is made as a movement seal.

6. A shaft coupling according to claim 4, characterized in that the seal is formed by a flexible diaphragm.

7. A shaft coupling according to any of claims 4 to 6, characterized in that the seal is arranged radially inside the spring body (1).

8. A shaft coupling according to any of claims 1 to 7, characterized in that the spring body (1) annularly encloses the axis of rotation of the shafts.

## Revendications

1. Accouplement d'arbres élastique comprenant deux brides (4, 5) rigides et fixées aux extrémités de l'arbre, qui limitent ensemble un espace annulaire (2) entourant coaxialement l'axe de rotation, un liquide contenu dans l'espace annulaire ainsi qu'au moins un corps élastique (1) en matériau élastique à base de caoutchouc qui relie les brides, caractérisé en ce que le corps élastique (1) est disposé dans l'espace annulaire (2) et en ce que le liquide présente essentiellement la même densité que le corps élastique.

2. Accouplement d'arbres selon la revendication 1, caractérisé en ce que le corps élastique (1) relie les surfaces de maintien (3) des deux brides (4, 5) opposées axialement l'une à l'autre.

3. Accouplement d'arbres selon la revendication 1, caractérisé en ce que le corps élastique (1) relie les surfaces de maintien (3) des deux brides (4, 5) s'entourant radialement l'une l'autre.

4. Accouplement d'arbres selon les revendications 1 à 3, caractérisé en ce que les deux brides (4, 5) présentent un joint étanche en direction périphérique, tout en pouvant se déplacer l'une par rapport à l'autre.

5. Accouplement d'arbres selon la revendication 4, caractérisé en ce que l'étanchéité (6, 7) est conçue comme un joint mobile.

6. Accouplement d'arbres selon la revendication 4, caractérisé en ce que ce joint est constitué par une membrane élastique.

7. Accouplement d'arbres selon les revendications 4 à 6, caractérisé en ce que le joint est disposé radialement à l'intérieur du corps élastique (1).

8. Accouplement d'arbres selon les revendications 1 à 7, caractérisé en ce que le corps élastique (1) a une forme annulaire et entoure l'axe de rotation de l'arbre.

Fig. 1

Fig. 2